# EUROPEAN PATENT SPECIFICATION

(11) **EP 1 040 084 B1**
(45) Date of publication and mention of the grant of the patent: **19.06.2002**
(21) Application number: 98952607.4
(22) Date of filing: 18.09.1998
(51) Int. Cl.: C03B 5/027, C03B 5/033

(54) **COMPOSITE SYSTEM FOR MELTING AND TREATING GLASS, TOGETHER WITH ASSOCIATED METHOD OF PRODUCTION, FOR ARTISTIC GLASS MANUFACTURERS**
KOMBINIERTES SYSTEM ZUM SCHMELZEN UND ZUR BEHANDLUNG VON GLAS ZUSAMMEN MIT EINEM PRODUKTIONSVERFAHREN FÜR KÜNSTLERISCHE GLASHERSTELLER
SYSTEME COMPOSITE PERMETTANT DE FONDRE ET DE TRAITER DU VERRE, AINSI QUE PROCEDE ASSOCIE DE PRODUCTION, POUR DES FABRICANTS DE VERRE ARTISTIQUE

(30) Priority: 24.09.1997 IT MI972157
(43) Date of publication of application: 04.10.2000
(73) Proprietor: Enel Societa'per Azioni, 00198 Roma (IT); Cesi-Centro Elettrotecnico Sperimentale Italiano Giacinto Motta S.P.A., 20134 Milano (IT); Stazione Sperimentale del Vetro, 30141 Murano (IT)
(72) Inventor: GRATTIERI, Walter, I-24058 Romano Di Lombardia (IT); CADORE, Angelo, Domenico, I-20090 Segrate (IT); DALL'IGNA, Roberto, I-31100 Treviso (IT)
(74) Representative: Faggioni, Giovanmaria, Dr.
(86) International application number: EP9805980
(87) International publication number: WO9915467

(56) References cited:
- EP-A- 0 185 178
- US-A- 3 585 268
- US-A- 4 389 724

## Description

The present invention relates to a glass melting system. In particular, it relates to a melting system which can be used by artistic glass manufacturers.

Among artistic glass manufacturers, it is fairly widespread practice to use methane-gas operated melting furnaces in which the processing cycle is controlled manually on the basis of the experience of the artist and his assistants.

Normally such a business is equipped with various furnaces for melting glass with different characteristics and colours, from where the artist draws the material for his creations.

The management of these furnaces is somewhat complex and the melting cycle is mainly supervised by expert operators who assist the artist with the refining work.

The furnaces used hitherto essentially consist of a refractory-material chamber inside which melting of the glass is performed and from which the glass is removed a little at a time by the artist. Suitable openings are provided for manually introducing into the furnace the minerals which will form the glass and which are deposited in special containers on the bottom of the furnace.

The heat needed to heat up the vitreous mass is produced by the combustion of methane gas, the supply of which is regulated by means of a simple tap operated manually. In this way, temperature regulation and the supply of heat during the various stages of the melting cycle is supervised entirely by expert operators.

As will be appreciated, these furnaces have various drawbacks, the main ones being the impossibility of industrialization, on account of the highly empirical nature of the regulating systems, and the lack of repeatability of the process since it is dependent upon manual operations.

Moreover the vitreous mass being melted must be continuously monitored by the operator who must remain for several hours in uncomfortable conditions so as to be able to intervene constantly during the melting cycle to ensure that it is performed in the correct manner. In fact, the furnace, after it has been started the first time, is prepared at the end of each working day, charging it with new material which is heated up to the melting condition during the night, and then continuing the refining process until the morning so that the artist is able to remove the glass which is ready at the start of the working day. The temperature of the vitreous mass during the refining stage and the subsequent charging of material must be carefully regulated so as to allow the dispersion of gas bubbles and avoid the formation of "cords" or lumps which, sinking into the vitreous mass, must be removed by suitable techniques or, in the worst situation, irremediably damage a night-time's work. In fact, very often, the vitreous mass from the "first melt" is discarded because it is unsuitable for obtaining high-quality artistic objects.

Moreover, the complete discontinuity (24 hour cycle) of the process for producing glass for artistic use makes it impossible to establish empirically an optimum condition which may be maintained over time (something which, instead, may be obtained during continuous industrial production processes).

Other drawbacks are a direct result of the use of combustible gas. The combustion of gas, in fact, requires the supply of large volumes of air which consequently must be treated. Since heating of the glass, especially if enriched with metal colouring substances, produces harmful combustion residue (such as metal oxides, for example cadmium and arsenic oxides), continuous ventilation and/or forced ventilation is required for removal of the fumes. In view of the presence of the large volumes of air to be treated, these furnaces must be provided with powerful, specifically designed, suction and filtering systems which involve not insignificant additional costs. Suction hoods are indispensable in particular in the region of the opening for removal of the glass. Despite this, the harmful gases are dispersed, at least partly, in the workshop and therefore inhaled by the operators. In addition, the suction and filtering plants, as well as the combustion of methane gas, are sources of considerable noise which also adversely affects the environmental comfort.

Moreover, the flame resulting from the combustion of the gas applies heat in particular to the superficial part of the vitreous mass, heat which is then transferred, by means of conduction; to the lower layers, resulting in high thermal gradients inside the mass, which prevent correct settling required to ensure that the mass of molten glass is free from gas bubbles which are inevitably produced during melting.

The energy consumption is also considerable, both owing to the type of furnace used and the limited capacity for control of the process.

Although affected by all these problems, most of the glass artists continue to use this type of furnace since tradition has consolidated the idea among them that this is the only type of furnace which can be used. Consequently, there exists a technical prejudice which has prevented the advance of any technological progress capable, for the same or improved quality of the product obtained, of improving the hygienic and sanitary conditions and overcoming all the drawbacks resulting from manual control of the melting cycle.

The use of electric energy for melting the glass has hitherto been adopted on a very small scale, being limited to continuous glass production plants, for example for the production of industrial glass containers.

in these plants, the glass is melted rapidly in a continuous manner and conveyed away to the moulding machines along casting channels where it is kept in the fluid state by means of heat generated by electrodes spaced at regular intervals and located on either side of the casting channel. The electrodes have only a secondary function for maintaining the fluidity of the vitreous mass.

However, hitherto, the use of heat produced by electrical resistances has proved to be suitable only for less sophisticated applications of the abovementioned type, where the glass does not have to be treated with delicate thermal cycles and therefore has not found any application, per se, in melting furnaces for artistic glass.

The object of the present invention is that of overcoming the drawbacks associated with gas-operated melting furnaces of the known art, by means of the suitable use of electric energy.

This object is achieved by a melting furnace as described in Claim 1, a system as in Claim 7 and with an operating method described in Claim 11.

Further characteristic features and advantages of the furnace according to the invention will emerge, however, more clearly from the detailed description, which follows, of a preferred embodiment thereof, provided by way of example and illustrated in the accompanying drawings, in which:

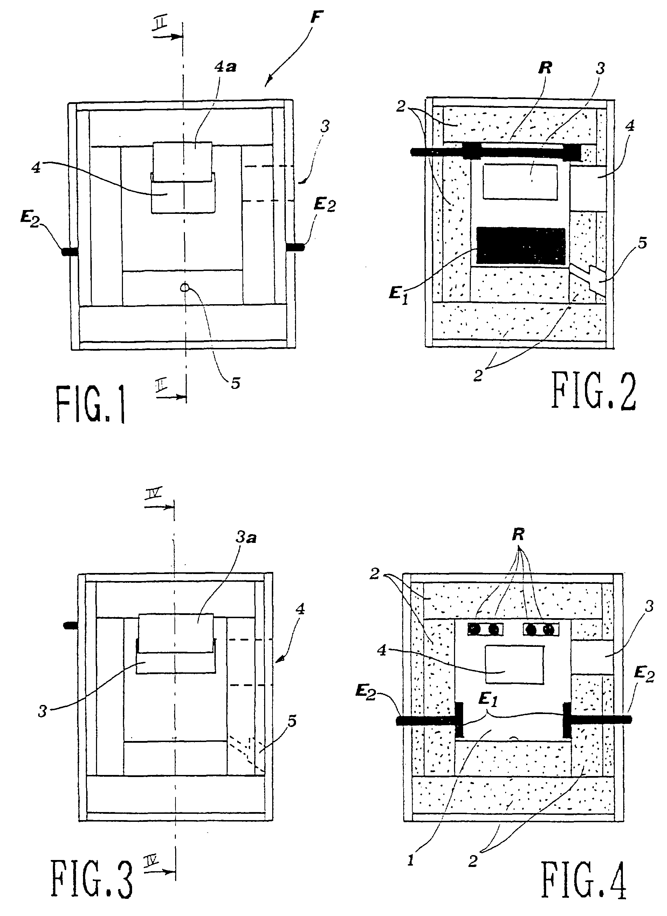

Fig. 1 is a front elevation view of the melting furnace according to the invention;
Fig. 2 is a cross-sectional view along the line II-II of Fig. 1;
Fig. 3 is a side elevation view of the furnace according to Fig. 1;
Fig. 4 is a cross-sectional view along the line IV-IV of Fig. 3;
Fig. 5 is a schematic side elevation view of the furnace with automatic charging machine; and
Fig. 6 is a schematic view illustrating, by way of example, the device for obtaining cullet.

As clearly shown in the Figures, the melting system according to the invention has a glass melting furnace F, an automatic charging machine C and a device D for obtaining cullet, which are illustrated in more detail below.

The furnace F is composed of a melting chamber 1 which is bounded by thick walls 2 which are made of refractory material and suitably dimensioned. The furnace, moreover, has two openings closed by associated hatches: a first charging opening or mouth 3, closed by a hatch 3a, is suitable for the introduction, into the furnace, of the charges of vitreous material before and during the glass melting cycle; a second removal opening or mouth 4, closed by a hatch 4a, is designed to allow the introduction of a tool for removal of the glass inside the chamber 1.

According to the invention, two electrodes E₁ are mounted on the two opposite sides of the chamber 1, in the vicinity of the bottom thereof. The electrodes E₁ are supplied with power by conductors E₂ which pass through the thickness of the walls 2 of the furnace and are connected to an electric power source (not shown). Moreover, the chamber 1 is provided internally with an electrical resistance R which is arranged in the vicinity of the crown of the furnace and also connected to an electric energy source outside the furnace.

The electrodes E₁ and the resistance R are the components which ensure the supply of heat allowing melting of the vitreous mass contained in the chamber 1.

The electrodes E₁ are in the form of electrode plates which are of a size such that they cover preferably the whole of one side of the chamber 1 submerged in the molten vitreous mass. The purpose of this is to achieve improved outputs, as will emerge further below.

A discharge hole 5, which passes through a wall 2 of the furnace F, is provided in the vicinity of the bottom of the chamber 1.

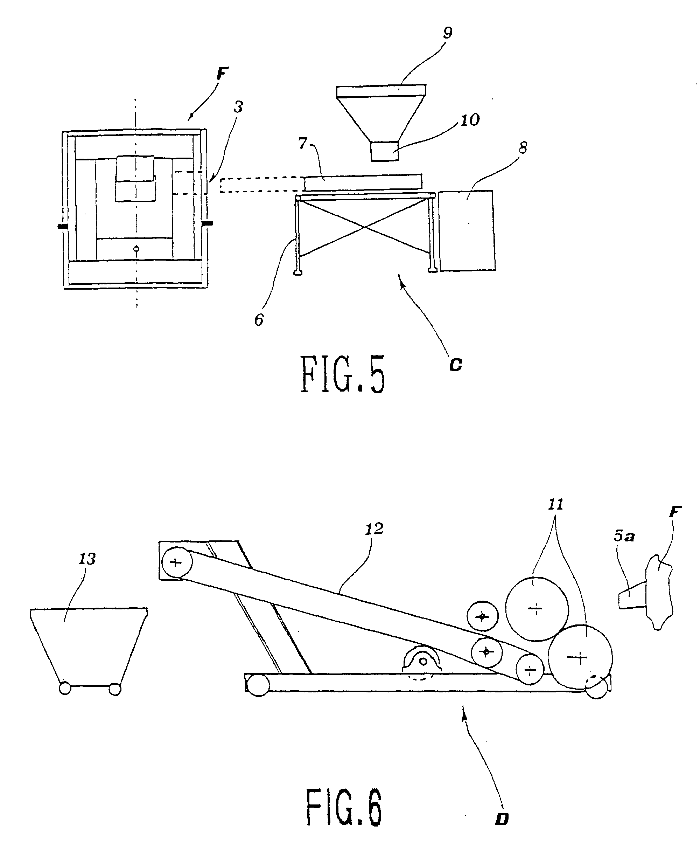

An automatic charging machine C is provided, moreover, on the side where the charging mouth 3 is situated. The charging machine C (Fig. 5) is composed of a support frame 6 on which an insertion drawer 7, operated automatically in suitable sequences by a control unit 8, is displaceably mounted. The drawer 7 has, arranged above it, a loading bucket 9 for the melting material (whether it be silicon-based minerals or cullet), which pours into the drawer 7, by means of a metering device 10, the quantity of material predetermined by the control unit 8.

A device for obtaining cullet, which will shall refer to below as "fritting machine" D, is provided on the side where the discharge hole 5 is situated. The fritting machine D (fig. 6) collects the glass in the fluid state tapped from the discharge hole 5, by means of a spout 5a, and treats it so as to obtain small-size cullet which can be easily broken up and introduced into the charging machine C for subsequent reuse. As can be seen in Fig. 6, the fritting machine D is composed of a pair of rollers 11 and a conveyor belt 12 with a meshwork or grid structure 12. The glass obtained from the spout 5a, suitably cooled, is passed between the rollers 11 and then conveyed on the belt 12 as far as a collecting bin 13. In this way sheets of solid glass, which can being easily broken up and reintroduced into the automatic charging machine C, are obtained.

In order to understand fully the advantages which the glass melting and treatment system according to the invention offers, a typical method of use thereof is illustrated below.

The furnace, empty at initial start-up, is charged via the charging mouth 3 - in accordance with a given sequence in a suitable manner automatically by the charging machine C - with silicon-based minerals having a composition suitable for obtaining the desired glass, until the plates E₁ are completely covered. At the start of the melting cycle, the mineral charge is solid and therefore not electrically conductive: according to the invention, therefore only the crown resistance R is energized so that it provides heat sufficient to reach the temperature for melting of the vitreous charge (of the order of 800°C). When the vitreous mass starts to fluidify and therefore becomes electrically conductive (at 1000°C the glass already has a fairly low resistance), the electrodes E₁ also start to exert their action. The current which passes between the two electrodes E₁, passing through the vitreous conductive mass, causes a rapid rise in the temperature thereof owing to the Joule effect.

The chamber 1 of the furnace is then further filled with subsequent charges of material until the required quantity of glass is reached. At predetermined intervals, of about 10-15 minutes, the drawer 7 is filled with a charge of material equivalent to about 10-20 kg and is then inserted automatically into the charging mouth 3 of the furnace F, allowing its contents to fall inside the chamber 1.

Finally, a refining stage follows, during which the vitreous mass is allowed to settle and therefore acquires its optimum characteristics for processing.

The introduction, in the innermost zone, of heat into the vitreous mass by means of the Joule effect has a high efficiency and therefore produces - as mentioned - a sudden and rapid rise in temperature. In addition to this, owing to the plate-like shape of the electrodes E₁, the distribution of current induced in the vitreous mass is uniform and causes an equally uniform and homogeneous heating action. All this brings the vitreous mass rapidly up to the optimum refining temperature (1100-1400°C depending on the type of glass).

In this sense, the presence of the electrodes E₁ is of vital importance because it allows the melting times to be reduced and the energy consumption to be optimized during processing of the glass.

After the furnace has been started up the first time, the vitreous mass which lies constantly on the bottom of the chamber 1 remains in the conductive state and therefore the electrodes E1 are always operative. During the cycles after the first one, therefore, the heat supplied by the electrodes has the purpose mainly of melting and refining the subsequent charges which are introduced, so as to compensate for the volume of glass used by the artist during the course of the previous working day. The electrical resistance R in the crown continues to exert a positive effect principally in order to keep the surface layer of the vitreous mass at the correct temperature, since otherwise the latter would cool owing to the transfer of heat into the air contained in the melting chamber 1.

When necessary, it is possible to extract the molten glass by opening the discharge hole 5, after bringing up the fritting machine D into the operative position.

The combination of the two electric heating elements E₁ and R inside the same melting furnace, as well as the presence of the automatic charging machine and the fritting machine, therefore, results in attainment of the preset objects and provides a multiplicity of obvious advantages compared to the known art, as well as other further surprising advantages.

Firstly, heating by means of electric energy does not produce large volumes of harmful gas which must be treated and therefore the whole system does not have any negative effects from the health point of view. Also it is no longer necessary to use powerful suction hoods and costly air purification filters.

Secondly, the heat is applied to the vitreous mass in a uniform manner. In particular the heat introduced owing to the Joule effect by the electrodes E₁ is produced directly in the core of the vitreous mass, such that the heating is performed much more efficiently and the energy consumption may be reduced.

High thermal gradients no longer occur, with considerable advantage in terms of the homogeneity of the mass. Surprisingly it has been found that, under these conditions, the behaviour of the molten glass mass tends to maintain a certain stratification of the charges. In other words, the subsequent charges which are introduced after initial refining tend to remain stratified. This results in the further advantage of being able to introduce, in succession, charges with a different colour into the same furnace - according to the requirements which arise during the working day - without their mixing with one another. This allows obviously a reduction in the number of furnaces which must be kept operating simultaneously in the workshop. The various types of glass which gradually form layers on the bottom of the melting chamber 1 may then be easily discharged in the molten state via the discharge hole 5, as already described.

Moreover the recycling of small-size cullet, such as that resulting from use of the fritting machine D, in the automatic charging machine allows an increase in the speed of colour changing, using high percentages of cullet.

Furthermore, owing to the homogeneity of the molten vitreous mass and the possibility of dual regulation - upper and internal - of the heating, the troublesome defects associated with the furnaces of the known art, such as gas bubbles, "cords" or lumps dispersed in the molten glass, no longer occur.

The use of the two electric heaters also provides undoubted advantages from the point of view of regulation and control. In fact, control of the melting process is obtained by suitably regulating the currents flowing in the resistance R and between the electrodes E₁: therefore, depending on the most convenient cost/benefit ratio, all the known methods of regulation of electrical loads such as, for example, control by means of voltage variation, current choking, buffer impedance, etc., may be used.

As a result of the combined use of the two power supplies, easily co-ordinated by means of an electric control system which is repeatable and can be easily industrialized, it is possible to obtain a 24-hour production cycle which consists of the following steps:
- heating of the vitreous mass;
- introduction of successive glass charges by means of an automatic loading system;
- complete melting until a desired fluidity level is reached;
- controlled refining of the vitreous mass;
- removal and processing at the most suitable temperature;
and which may be defined and optimized experimentally and then suitably stored on electronic components of the known type. This provides the advantageous possibility of defining and coding, for each type of glass and processing operation to be performed, an optimum repeatable power supply cycle which always provides the best results in terms of quality and consumption and which may be easily automated and then simply monitored, for example on a monitoring viewer.

The conversion of the current into heat, owing to the Joule effect in the vitreous mass, is highly efficient and therefore allows the electrodes E₁ to be energized with oscillating or modulated cycles which allow further reductions in consumption to be achieved.

The optimum regulation of the heat supplied to the furnace F by means of the combined use of the resistance R and the electrodes E₁ as well as the efficiency of the energy conversion which takes place inside the vitreous mass by means of the electrodes allow the working load of the electrodes E₁ to be lightened so that they may be of the non-cooled type, with considerable undeniable advantages.

Advantageously, for reasons of total safety, it is possible to envisage controlled opening of the removal mouth 4 which automatically interrupts the supply of electric current to the electrodes and to the resistance R, such that the operator is unable to come into contact accidentally with electric current sources.

The practical tests carried out on the furnace according to the invention have revealed:
- a notable reduction in the amount or harmful emissions of the exhaust fumes;
- a reduction in the energy requirement per kilogram of processed glass;
- an excellent quality of glass which can be used also during a "first melt".

It is understood, however, that the invention is not limited to the particular configuration which is illustrated above and which constitutes only a non-limiting example of the scope of the invention, but that numerous variants are possible, all within the scope of a person skilled in the art, without thereby departing from the scope of the invention itself.

For example, the dimensions of the furnace have been optimized in terms of heating and efficiency, so that the melting chamber is able to receive at least a quantity of glass useful for the daily working requirement of an artist (about 150 kg), but these must not be regarded as limiting.

## Claims

1. Discontinuously operating melting furnace (F) for the production of glass for artistic use, of the type having a melting chamber (1) bounded by walls (2) of refractory material at least one mouth (3, 4, 5) for charging and/or removal of the glass, and two heating elements: a first heating element (R) in the form of electrical resistances, and a second heating element (E₁) in the form of plate-like electrodes at least partially immersed in the vitreous mass contained inside said melting chamber and apt to apply heat to said vitreous mass by Joule effect,
**characterised in that**
said first heating element is arranged in the vicinity of the crown of said melting chamber (1) and the plate-like electrodes (E₁) of said second heating element are mounted directly on two opposite sides walls (2) of said melting chamber so that one of the main surfaces of these plate-like electrodes (E₁) fully contacts the associated wall, said electrodes (E₁) being completely immersed in the vitreous mass.

2. Melting furnace as claimed in Claim 1, in which said electrodes (E₁) of said second heating element are energised with oscillating or modulated cycles and are of the non-cooled type.

3. Melting furnace as claimed in Claim 1, comprising at least one discharge hole (5), said hole crossing one of said walls in the vicinity of the bottom of said melting chamber (1) and allowing to discharge the stratified vitreous mass in the fluid state.

4. Melting furnace as claimed in any one of the preceding claims, in which opening of said charging and/or removal mouth (3, 4) is synchronised with interruption of the power supply to said electric heating elements (R).

5. Melting furnace as claimed in any one of the preceding claims, comprising furthermore a control unit in which are stored parameters for energising the electric heating elements in function of time.

6. Melting furnace as claimed in any one of the preceding claims, in which the internal volume of the melting furnace is such that it contains about 150 kg of useful vitreous mass.

7. A system for melting and treating glass for artistic use, comprising a discontinuously operating melting furnace (F) as defined in claim 1, having at least one charging mouth (3) in its upper part and a discharge hole (5) in its bottom part, a charging machine (C) associated to said charging mouth (3), suitable for introducing in succession into the furnace charges of material for melting, and a device (D) for obtaining cullet arranged in the vicinity of said discharge hole (5).

8. System as claimed in Claim 7, in which said charging machine (C) comprises a displaceable insertion drawer (7), operated automatically by a control unit (8), and a bucket (9) for loading the material to be melted, suitable for pouring the melting material into said drawer by means of a metering device.

9. System as claimed in Claim 8, in which the quantity of melting material which is poured into said drawer is determined by the control unit.

10. System as claimed in Claim 7, in which said device for obtaining cullet consists of a fritting machine which is composed of a pair of rollers (11) and a conveyor belt (12) of the meshwork or grid type.

11. Method for operation of a glass melting furnace as claimed in claims 5 or 6, or a system according to claims 8 or 9, in which the melting and treatment cycle is controlled automatically - on the basis of parameters stored in said control unit - for energizing the heating elements of the furnace, after filling, up to the desired level, the melting chamber with solid melting material, in the following sequence:
- reaching the temperature for electric conduction of the vitreous mass, by energising the first heating element;
- supplying electric current to the molten vitreous mass by means of said second heating element;
- adding subsequent charges of solid melting material by means of the automatic charging machine;
- reaching and maintenance of the refining temperature between 1100°C and 1400°C.

12. Method as claimed in Claim 11, in which the step involving the addition of subsequent charges includes the addition of charges which have physical and chemical characteristics different from those of the preceding ones and which gradually form layers inside the melting chamber.

13. Method as claimed in Claim 11 or 12, comprising moreover the steps of:
- tapping the glass in the fluid state from the discharge hole;
- treating the glass in the fluid state by means of the device for obtaining cullet;
- reintroducing the cullet, as melting material, into the melting chamber by means of the automatic charging machine.

## Patentansprüche

1. Diskontinuierlich arbeitender Schmelzofen (F) zur Herstellung von Glas zur künstlerischen Verwendung vom Typ mit einer Schmelzkammer (1), die von Wänden (2) aus feuerfestem Material begrenzt wird, wenigstens einer Mündung (3, 4, 5) zum Beladen und/oder Entfernen des Glases, und zwei Heizelementen: einem ersten Heizelement (R) in Form von elektrischen Widerständen und einem zweiten Heizelement (E₁) in Form von plattenähnlichen Elektroden, die wenigstens teilweise in die in besagter Schmelzkammer enthaltene glasartige Masse eingetaucht sind und gestaltet sind, um Wärme auf besagte glasartige Masse durch Joule-Effekt anzuwenden,
**dadurch gekennzeichnet, daß** besagtes erstes Heizelement in der Nähe der Kuppel besagter Schmelzkammer (1) angeordnet ist und die plattenähnlichen Elektroden (E₁) besagten zweiten Heizelements direkt an zwei gegenüberliegenden Seitenwänden (2) besagter Schmelzkammer montiert sind, so daß eine der Hauptflächen dieser plattenähnlichen Elektroden (E₁) die zugehörige Wand vollständig berührt, wobei besagte Elektroden (E₁) vollständig in die glasartige Masse eingetaucht sind.

2. Schmelzofen nach Anspruch 1, in dem besagte Elektroden (E₁) besagten zweiten Heizelements mit oszillierenden bzw. modulierten Zyklen eingeschaltet sind und vom ungekühlten Typ sind.

3. Schmelzofen nach Anspruch 1, mit wenigstens einem Auslaßloch (5), wobei besagtes Loch eine der Wände in der Nähe der Unterseite besagter Schmelzkammer (1) kreuzt und ein Auslassen der geschichteten glasartigen Masse im Flüssigkeitszustand erlaubt.

4. Schmelzofen nach irgendeinem der vorangehenden Ansprüche, in dem ein Öffnen besagter Belade- oder Entfemmündung (3, 4) mit einer Unterbrechung der Energieversorgung für besagte elektrische Heizelemente (R) synchronisiert ist.

5. Schmelzofen nach irgendeinem der vorangehenden Ansprüche, ferner mit einer Steuereinheit, in der Parameter zum Einschalten der elektrischen Heizelemente als Funktion der Zeit gespeichert sind.

6. Schmelzofen nach irgendeinem der vorangehenden Ansprüche, in dem das interne Volumen des Schmelzofens derart ist, daß es ungefähr 150 kg nützliche glasartige Masse enthält.

7. Ein System zum Schmelzen und Behandeln von Glas zur künstlerischen Verwendung, mit einem diskontinuierlich arbeitenden Schmelzofen (F) nach Anspruch 1, mit wenigstens einer Belademündung (3) in seinem oberen Teil und einem Auslaßloch (5) in seinem unteren Teil, einer mit besagter Belademündung (3) verbundenen Belademaschine (C),die zum Einführen von Chargen mit Material zum Schmelzen in den Ofen in Abfolge geeignet ist, und einer Einrichtung (D) zum Erhalten von Scherben, die in der Nähe besagten Auslaßloches (5) angeordnet ist.

8. System nach Anspruch 7, in dem besagte Belademaschine (C) eine verschiebbare Einsteckschublade (7), die von einer Steuereinheit (8) automatisch betrieben wird, und einen Eimer (9) zum Laden des zu schmelzenden Materials aufweist, der zum Gießen des Schmelzmaterials in besagte Schublade mittels einer Dosiereinrichtung geeignet ist.

9. System nach Anspruch 8, in dem die Menge des Schmelzmaterials, das in besagte Schublade gegossen wird, von der Steuereinheit bestimmt wird.

10. System nach Anspruch 7, in dem besagtes Einrichtung zum Erhalten von Scherben aus einer Sintermaschine besteht, die aus einem Paar Rollen (11) und einem Förderband (12) vom Netzwerk- bzw. Gittertyp besteht.

11. Verfahren zum Betreiben eines Glasschmelzofens nach Anspruch 5 oder 6 bzw. eines Systems gemäß den Ansprüchen 8 oder 9, in dem der Schmelz- und Behandlungszyklus - auf der Basis von in besagter Steuereinheit gespeicherter Parameter - zum Einschalten der Heizelemente des Ofens nach Auffüllen der Schmelzkammer mit festem Schmelzmaterial bis zur gewünschten Höhe in der folgenden Weise automatisch gesteuert wird:
- Erreichen der Temperatur für elektrische Leitung der glasartigen Masse durch Einschalten des ersten Heizelements;
- Versorgen der geschmolzenen glasartigen Masse mit elektrischem Strom mittels besagten zweiten Heizelements;
- Hinzufügen von nachfolgenden Chargen mit festem Schmelzmaterial mittels der automatischen Belademaschine;
- Erreichen und Aufrechterhalten der Läuterungstemperatur zwischen 1100°C und 1400°C.

12. Verfahren nach Anspruch 11, in dem der Schritt, der das Hinzufügen von nachfolgenden Chargen mitsichbringt, das Hinzufügen von Chargen einschließt, die physikalische und chemische Eigenschaften aufweisen, die von denjenigen der vorangehenden verschieden sind und die allmählich Schichten innerhalb der Schmelzkammer bilden.

13. Verfahren nach Anspruch 11 oder 12, ferner die Schritte umfassend:
- Abzweigen des Glases im flüssigen Zustand aus dem Ablaßloch;
- Behandeln des Glases im flüssigen Zustand mittels der Einrichtung zum Erhalten von Scherben;
- Erneutes Einführen der Scherben als Schmelzmaterial in die Schmelzkammer mittels der automatischen Belademaschine.

## Revendications

1. Four de fusion à fonctionnement discontinu (F) pour la production de verre pour un usage artistique, du type comportant une chambre de fusion (1) délimitée par des parois (2) d'un matériau réfractaire, au moins un accès (3, 4, 5) pour le chargement et/ou l'extraction du verre, et deux éléments de chauffage : un premier élément de chauffage (R) sous la forme de résistances électriques, et un deuxième élément de chauffage (E1) sous la forme d'électrodes du type plaques au moins partiellement immergées dans la masse vitreuse contenue à l'intérieur de ladite chambre de fusion et adaptées à appliquer une chaleur sur ladite masse vitreuse par effet Joule,
**caractérisé en ce que**
ledit premier élément de chauffage est agencé au voisinage de la voûte de ladite chambre de fusion (1) et les électrodes du type plaques (E1) dudit deuxième élément de chauffage sont montées directement sur deux parois latérales opposées (2) de ladite chambre de fusion de manière qu'une des surfaces principales de ces électrodes du type plaques (E1) contacte pleinement la paroi associée, lesdites électrodes (E1) étant complètement immergées dans la masse vitreuse.

2. Four de fusion selon la revendication 1, dans lequel lesdites électrodes (E1) dudit deuxième élément de chauffage sont excitées avec des cycles oscillants ou modulés et sont du type non-refroidi.

3. Four de fusion selon la revendication 1, comprenant au moins un orifice de décharge (5), ledit orifice traversant une desdites parois au voisinage du fond de ladite chambre de fusion (1) et permettant de décharger la masse vitreuse stratifiée à l'état fluide.

4. Four de fusion selon l'une quelconque des revendications précédentes, dans lequel l'ouverture dudit accès (3, 4) de chargement et/ou d'extraction est synchronisée avec l'interruption de l'alimentation en courant desdits éléments de chauffage électrique (R).

5. Four de fusion selon l'une quelconque des revendications précédentes, comprenant également une unité de commande dans laquelle sont stockés des paramètres pour l'excitation des éléments de chauffage électrique en fonction du temps.

6. Four de fusion selon l'une quelconque des revendications précédentes, dans lequel le volume interne du four de fusion est tel qu'il contient environ 150 kg de masse vitreuse utile.

7. Système pour fondre et traiter du verre pour un usage artistique, comprenant un four de fusion à fonctionnement discontinu (F) tel que défini dans la revendication 1, comportant au moins un accès de chargement (3) dans sa partie supérieure et un orifice de décharge (5) dans sa partie inférieure, une machine de chargement (C) associée audit accès de chargement (3), adaptée à introduire successivement dans le four des charges de matériau pour fusion, et un dispositif (D) pour obtenir du calcin agencé au voisinage dudit orifice de décharge (5).

8. Système selon la revendication 7, dans lequel ladite machine de chargement (C) comprend un tiroir d'insertion adapté à être déplacé (7), actionné automatiquement par une unité de commande (8), et un godet (9) pour charger le matériau devant être fondu, adapté à verser le matériau de fusion dans ledit tiroir au moyen d'un dispositif de dosage.

9. Système selon la revendication 8, dans lequel la quantité de matériau de fusion qui est versée dans ledit tiroir est déterminée par l'unité de commande.

10. Système selon la revendication 7, dans lequel ledit dispositif pour obtenir le calcin consiste en une machine de frittage qui est constituée d'une paire de rouleaux (11) et d'un transporteur à bande (12) du type à mailles ou à grille.

11. Procédé pour faire fonctionner un four de fusion de verre selon l'une des revendications 5 ou 6, ou un système selon l'une des revendications 8 ou 9, dans lequel le cycle de fusion et de traitement est commandé automatiquement - sur la base de paramètres stockés dans ladite unité de commande - pour exciter les éléments de chauffage du four, après avoir rempli, jusqu'au niveau souhaité, la chambre de fusion d'un matériau de fusion solide, selon la séquence suivante :
- obtention de la température pour conduction électrique de la masse vitreuse, en excitant le premier élément de chauffage ;
- fourniture de courant électrique à la masse vitreuse fondue au moyen dudit deuxième élément de chauffage ;
- addition de charges ultérieures de matériau de fusion solide au moyen de la machine de chargement automatique ;
- obtention et entretien de la température d'affinage entre 1 100°C et 1 400°C.

12. Procédé selon la revendication 11, dans lequel la phase consistant à ajouter des charges ultérieures comprend l'addition de charges qui présentent des caractéristiques physiques et chimiques différentes de celles des précédentes et qui forment progressivement des couches à l'intérieur de la chambre de fusion.

13. Procédé selon la revendication 11 ou 12, comprenant en outre les phases consistant à :
- soutirer le verre à l'état fluide depuis l'orifice de décharge ;
- traiter le verre à l'état fluide au moyen du dispositif pour obtenir le calcin ;
- réintroduire le calcin, en tant que matériau de fusion, dans la chambre de fusion au moyen de la machine de chargement automatique.
